# EUROPEAN PATENT SPECIFICATION

(11) **EP 2 474 228 B1**
(45) Date of publication and mention of the grant of the patent: **28.08.2013**
(21) Application number: 11194384.1
(22) Date of filing: 19.12.2011
(51) Int. Cl.: A21C 13/02, A21B 1/46

(54) **Device for supporting and moving food dough in a plant for the production of baked products**
Vorrichtung zum Unterstützen und Transportieren von Lebensmittelteig in einer Anlage für die Produktion von gebackenen Produkten
Dispositif pour porter et transporter de la pâte alimentaire dans un système pour la production de produits de boulangerie

(30) Priority: 09.03.2011 IT VI20110044; 10.01.2011 EP 11150521
(43) Date of publication of application: 11.07.2012
(73) Proprietor: ITECA Impianti Tecnologici Alimentari Speciali S.P.A., 37050 Palu (Verona) (IT)
(72) Inventor: Benetti, Luigi, 37100 Verona (IT)
(74) Representative: Autuori, Angelo

(56) References cited:
- WO-A1-01/33967
- GB-A- 254 487
- US-A- 1 395 211
- US-A- 3 587 829

## Description

### Field of the invention

The present invention generally relates to the technical field of the food industry, and particularly relates to a device for supporting and moving the food dough through a plant for the production of baked products.

### Background of the invention

It is known that the so called baked products, such as bread, rusks or the like, are generally produced starting from one or more portions of food dough, suitably worked, which are left to leaven, then baked in appropriate ovens and finally packed.

Obviously, times and ways of the leavening and baking steps vary according to the product to be obtained, as well as the base mixture to produce the food dough portions.

Normally, in the plants for the continuous production of baked products, the food dough is put into suitable devices which, once connected to an appropriate transport apparatus, for example a chain, bring the dough at first into the leavening section for a first operative time and then into the baking section for a second operative time.

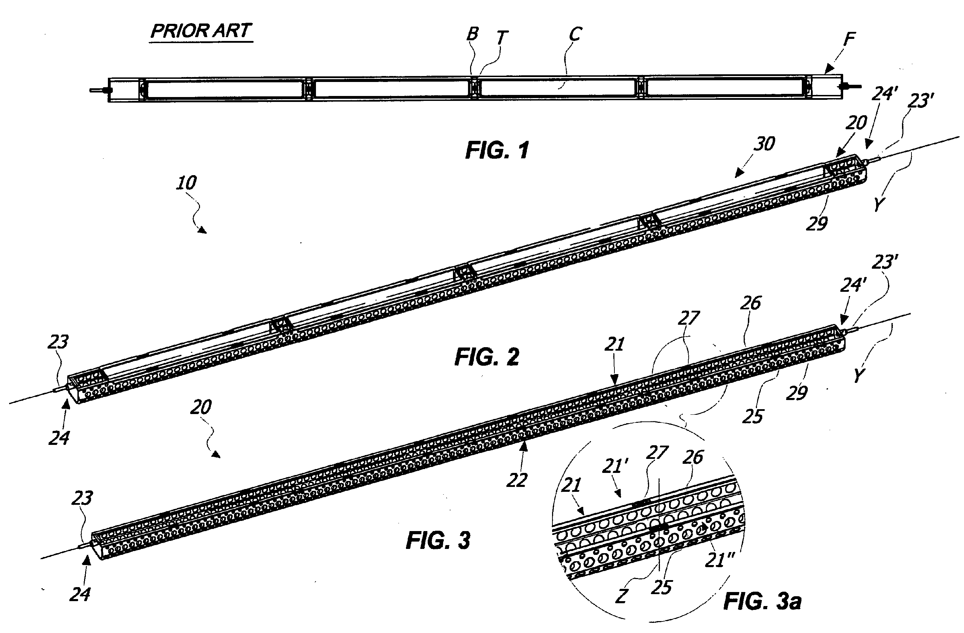

FIG. 1 illustrates a device of this type, *per se* known, which comprises a plurality of metal containers **C** and an outer support frame **F.** The containers **C** are at first coupled to the frame **F** and then anchored thereto, so as to prevent them from uncoupling from the frame **F** during their course through the leavening and baking sections.

The anchoring takes place by means of fitting brackets **B** kept in position by a screw **T** blocked by a bolt.

In practice this known device has shown some recognized drawbacks.

First of all, the presence of mounting paste or the like, necessary to allow the possible disassembling of the bolted connections, may contaminate the food dough present in the containers, particularly considering the high temperature reached in the baking ovens.

Further, upon the substitution of the containers it is necessary to stop the whole plant, since it is necessary to unscrew and remove from the frame the fastening brackets of the containers. Apparently, these waste times negatively influence the productivity of the whole plant.

Moreover, the bolts may unscrew causing the loss of the container in case of overturn of the frame to clean it. This loss may then damage the whole transport system.

Moreover, this problem is emphasized by the fact that the metal containers require a very frequent maintenance and/or replacement, particularly because of the sudden degradation of the superficial inner layer thereof, suitable to the detachment of the food dough.

Form WO01/33967 a device is known having all the features of the preamble of the independent claim 1.

### Summary of the invention

It is an object of the present invention to at least partially overcome the above described drawbacks by providing a highly efficient and comparatively cheap device for supporting and moving the food dough through a plant for the production of baked products.

Another object of the invention is to provide a device which allows to maximize the productivity of the plant in which it is mounted.

Another object of the invention is to provide a device which allows a quick and simple maintenance and/or replacement thereof.

Another object of the invention is to provide a device which allows to minimize the danger of contaminations of the transported food dough.

These and other objects, as better explained hereafter, are fulfilled by a device for supporting and moving the food dough through a plant for the production of baked products according to claim 1.

The device includes at least one container, which defines a first longitudinal axis, suitable to house at least one portion of food dough.

The device further includes a frame for supporting the at least one container. The frame has elongated shape to define a second longitudinal axis, and includes two opposite ends operatively connectable to a transport apparatus thereof through the plant, for example a chain.

Advantageously, the supporting frame may have quick connection/disconnection means to/from the transport apparatus.

For example, the supporting frame may comprise at least one pivot placed at one of the two ends which may be mounted within a seat to slidably move between an extended working position, wherein the frame and the transport apparatus are reciprocally connected, and a contracted resting position, wherein the frame is freely unconnectable from the transport apparatus.

Advantageously, within the seat counteracting elastic means may be placed, acting on the at least one pivot to force it in its working position.

Appropriately, alternatively or combined with the counteracting elastic means, removable blocking means acting on the pivot to keep it in its working position may be provided. These movable blocking means may include a screw or a blocking pin, which may be movably coupled to the pivot when it is in its working position and uncoupled therefrom to bring the pivot to its resting position and to disconnect the frame.

In this way an operator, in order to disconnect the frame from the transport apparatus, acts at first manually on the at least one pivot to bring it to its rest position and then disconnects the frame in a quick and simple way.

The other end of the frame may include a second pivot, which may be or not configured as described above.

Appropriately, quick hooking/unhooking means of the at least one container to/from the supporting frame are provided.

Thanks to this configuration, the device allows to maximize the productivity of the plant in which it is mounted, as it eliminates the waste times during the production due to the replacement of the containers.

In fact, the quick hooking/unhooking means allow an extremely quick change, even during movement. Therefore, there is no more need to stop the plant for long periods. An area to allow a rapid replacement of the containers during the normal working cycle may be furthermore arranged.

The device then allows a quick and simple maintenance of the containers.

Moreover, the absence of bolts allows to avoid the use of mounting paste or the like, so as to minimize the danger of contamination of the transported food dough.

Advantageously, the at least one container and the frame may be reciprocally couplable/uncoupable so that when they are coupled the first and the second longitudinal axis are substantially parallel to each other.

Advantageously, the at least one container may be in food grade polymer material.

Preferably, this polymer material may be resistant at a temperature of at least 200°C, and even more preferably of at least 250 °C.

Thanks to this feature, the productivity of the plant is even more maximized, as the need to change the containers during the production is minimized.

Appropriately, the quick hooking/unhooking means may include at least one male member on one of the frame and the at least one container engageable with/ disengageable from a respective at least one female member made on the other between the frame and the at least one container to hook/unhook the at least one container to/from the supporting frame.

The male and female members may be configured to allow the hooking/unhooking of the at least one container to/from the frame by reciprocal sliding along the first and/or the second axis once they are reciprocally coupled.

Thanks to this feature, the productivity of the plant is even more maximized, as the operation of reciprocal anchorage of the container to the frame is extremely quick and simple.

In a preferred, non exclusive embodiment, the quick hooking/unhooking means may include at least one pair of male members made on opposite parts of one of the frame and the at least one container and at least one pair of female members made on corresponding opposite parts of the other of the frame and the at least once container.

Besides ensuring a safe connection between container and frame, this configuration further allows the connection independently from the coupling sense between container and frame.

Advantageously, the quick hooking/unhooking means may further comprise a safety element movable between a working position wherein it interacts with the at least one container to prevent its unhooking from the frame and a resting position, wherein the at least one container is freely hookable/unhookable to/from the frame, counteracting elastic means acting on the safety element to force it normally in its working position being provided.

This feature increases the safety of the anchorage between the container and the frame.

Advantageous embodiments of the invention are defined according to the dependent claims.

### Brief description of the drawings

Further features and advantages of the invention will appear more evident upon reading the detailed description of a preferred, non-exclusive embodiment of a device for supporting and moving the food dough through a plant for the production of baked products according to the invention, which is described as non limiting example with the help of the annexed drawings, in which:
**FIG. 1** is a top view of a device for the production of baked products according to the prior art;
**FIG. 2** is an axonometric view of an embodiment of the device **10;**
**FIG. 3** is an axonometric view of the frame **20,** with in **FIG. 3a** some enlarged details;

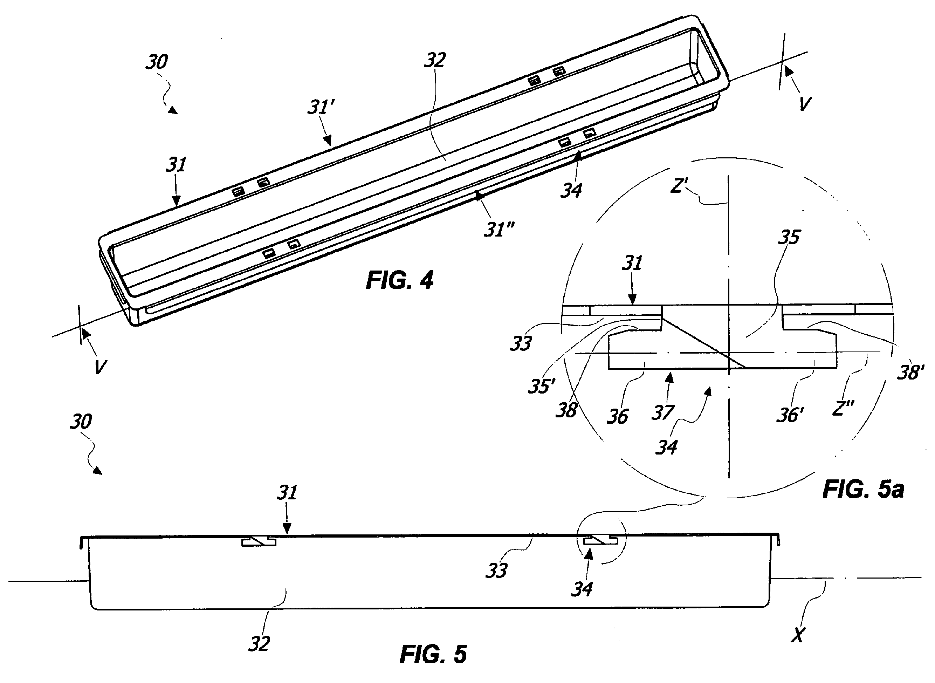

**FIG. 4** is an axonometric view of a container **30;**
**FIG. 5** is a sectioned view of the container of FIG. 4 taken along a plane *V* - V, with in **FIG. 5a** some enlarged details;
**FIG. 6** is a partially sectioned view of a frame **20** and container **30** upon reciprocal coupling step, with in **FIG. 6a** some enlarged details;
**FIG. 7** is a partially sectioned view of the frame **20** and of the container **30** of FIG. 6, reciprocally coupled to each other and upon reciprocal hooking step, with in **FIG. 7a** some enlarged details;
**FIG. 8** is a partially sectioned view of the frame **20** and of the container **30** of FIG. 7, reciprocally hooked to each other, with in **FIGG. 8a** e **8b** some enlarged details;
**FIG. 9** is a schematic view of a leavening section L and of a baking section **K** of a plant for the production of baked products, with in **FIG. 9a** some enlarged details;
**FIGS. 10a** and **10b** are enlarged views of a preferred, non exclusive embodiment of the frame **20,** wherein the pivot 23' is respectively in its working and resting position.

### Detailed description of a preferred embodiment of the invention

Referring to the above figures, a device **10** is described for supporting and moving the food dough through a plant for the production of baked products, such as bread or rusks, preferably in a continuous manner.

As per se known, a plant of this type may comprise a section of preparation of the food dough, wherein the basic ingredients of the baked product are mixed with each other to form a dough, a leavening section, a baking section which includes one or more ovens and a section for packaging the final product.

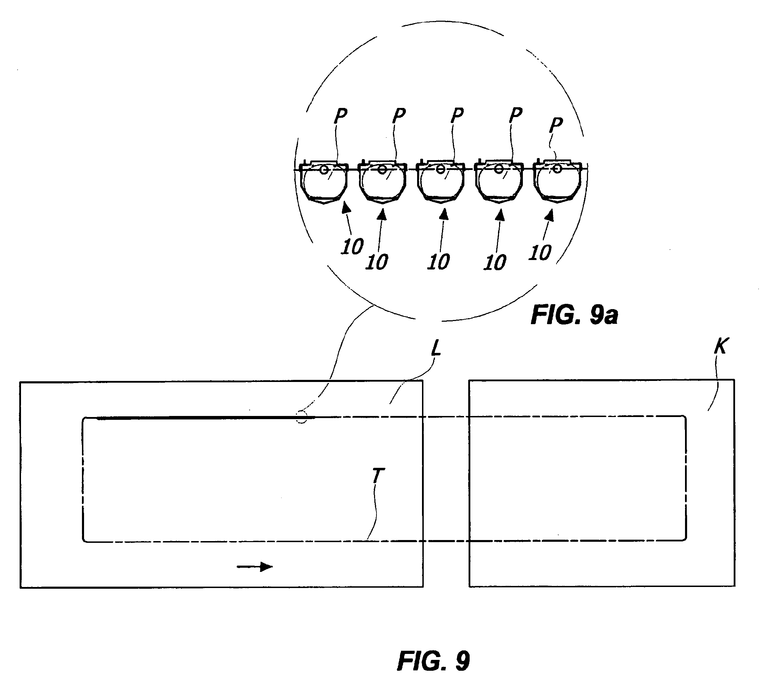

The sections may be all connected to each other. In particular, as shown in FIG. 9, the leavening section **L** and the baking section **K** may be connected to each other by means of a suitable transport mechanism, for example a chain **T.** To this chain a plurality of devices **10** may be operatively connected, which support the food dough **P** and move it through the leavening and baking sections. Preferably, the movement of the devices **10** within the plant may take place continuously, without stopping.

For example, to produce rusks the food dough **P** may stay for about one hour in the leavening section **L** and about 30 minutes in the baking section **K,** at a temperature of about 180 °C.

After a first coking the semi-finished product can be drawn from the container **30** and seasoned for about 10-12 hours. Later the semi-finished product can be cut and toasted in a second oven, where it remains for about 7-8 minutes at a temperature of about 210-220 °C, so as to produce the finished product.

As particularly shown in FIG. 2, the device **10** may include a frame **20** suitable to support one or more containers **30** for the food dough.

Each container **30,** which may have generally elongated shape to define a first longitudinal axis **X,** may comprise a first peripheral upper edge **31** and a concave portion **32** extending below the edge **31** to internally house one or more portions of food dough.

Advantageously, the containers **30** may be manufactured in metal material or in polymer material of food grade, preferably resistant to a temperature of at least 200 °C.

As used herein, the expression "polymer material resistant to a temperature of at least 200 °C" or derivates thereof is intended to indicate a polymer material suitable to continuously resist to a temperature of 200 °C for at least 30 minutes without visible macroscopic changes.

In a preferred, non exclusive embodiment, the containers may be manufactured in the plastic material LCP Vectra^{®} by Ticona^{®}.

The frame **20,** which may also have elongated shape to define a second longitudinal axis Y, may include a second peripheral upper edge **21** and a concave portion **22,** extending towards the bottom from the edge **21** to house inside it one or more containers **30.** To maximize the thermal exchange between the food dough in the containers **30** and the outer environment, as well as to lightweight the structure, the portion **22** of the frame **20** may have a plurality of openings **25.**

Moreover, the frame **20** may include a pair of pivots **23, 23'** in correspondence of the opposite ends **24, 24'** for the operative connection of the device **10** to the chain **T.**

During use, the containers **30** may be coupled to the frame **20** so that the second axis **Y** of the frame is substantially parallel, respectively coincides, with the first axis **X** of the containers **30.**

Appropriately, then, the coupling between the containers **30** and the frame **20** may take place in such a way that the lower surface **33** of the peripheral edge **31** at least partially faces the upper surface **26** of the peripheral edge **21.**

Once the coupling has taken place, the containers **30** may be anchored to the frame **20** so as to prevent them from uncoupling from the frame during their course through the leavening **L** and baking **C** sections.

Periodically, for clearing or maintenance purposes, the containers **30** may be uncoupled from the frame **20.** For this purpose, it is first of all necessary to disanchor the containers **30** from the frame **20** and then uncouple them.

In order to make these operations easier, quick hooking/unhooking means of the containers **30** to/from the frame **20** may be provided.

Appropriately, these quick hooking/unhooking means may include two pairs of male members **34,** made on opposite parts **31', 31"** of the peripheral edge **31** of each container **30,** engageable with/disengageable from two pairs of respective female members **27,** made on corresponding opposite parts **21', 21"** of the peripheral edge **21** of the frame **20.**

The female members **27** may include, respectively consist of, respective slots passing through the peripheral edge **21,** whereas the male members **34, 34'** may include, respectively consist of, respective hook members insertable into the slots **27.**

Advantageously, each slot **27** may be made on the peripheral edge **21** so as to define an axis **Z** substantially perpendicular to the second axis **Y** defined by the frame **20.**

On the other hand, each hook member **34** may comprise an elongated body **35** and a pair of appendices **36, 36'.** The last ones outwardly extend from opposite parts of the elongated body **35,** so as to allow the hooking/unhooking of the containers **30** to/from the frame **20** independently from the coupling sense thereof.

The elongated body **35** may downwardly extend from the peripheral body **31** to define an axis **Z'** substantially perpendicular to the first axis **X** defined by each container **30.** Upon coupling/uncoupling of the containers **30** with/from the frame **20,** the axis **Z'** and **Z** may substantially coincide.

The elongated appendices **36, 36'** may be made in correspondence with the free end **37** of the elongated body **35,** and may define an axis Z" substantially parallel to the first axis **X** defined by each container **30,** and, consequently, substantially perpendicular to the axis **Z** defined by each slot **27.**

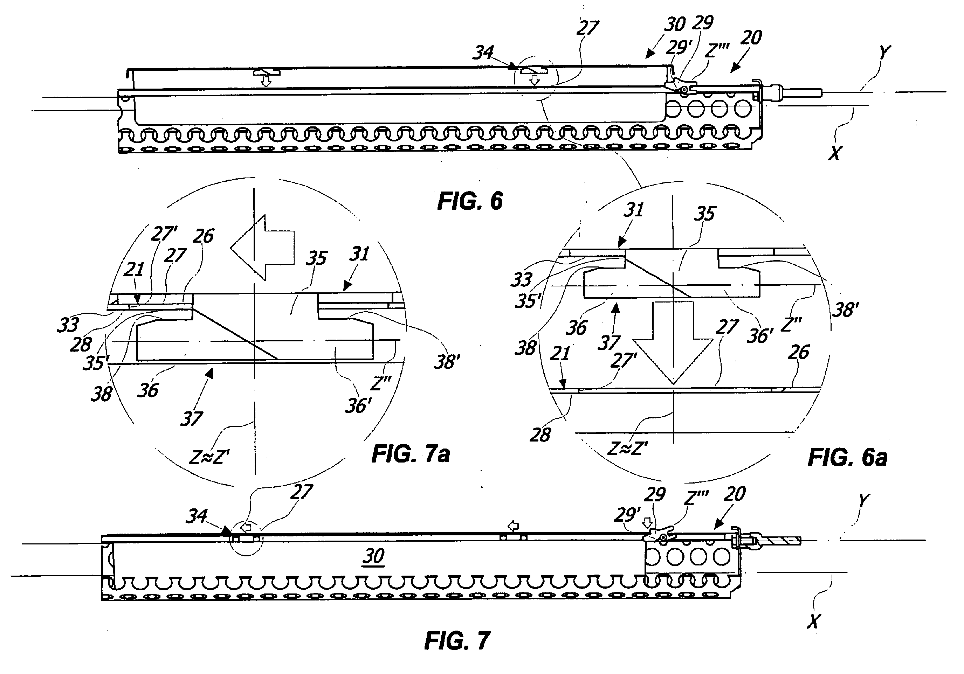

As particularly shown in FIGS. 6 and 6a, upon coupling/uncoupling of the containers **30** with/from the frame **20,** the end **37** of the elongated body **35,** together with the appendices **36, 36',** pass through the slots **27,** so that the appendices **36, 36'** face the peripheral edge **21** of the frame **20.** More in particular, the outer surfaces **38, 38'** of the appendices **36, 36'** face the lower surface **28** of the peripheral edge **21** of the frame **20.**

In order to hook the containers **30** to the frame **20,** it is necessary to reciprocally engage the hook members **34** into the slots **27.** For this purpose, as particularly shown in FIGS. 7 and 7a, once the containers **30** and the frame **20** are reciprocally coupled, it is sufficient to slide along the axis **X** to hook the first one to the second one.

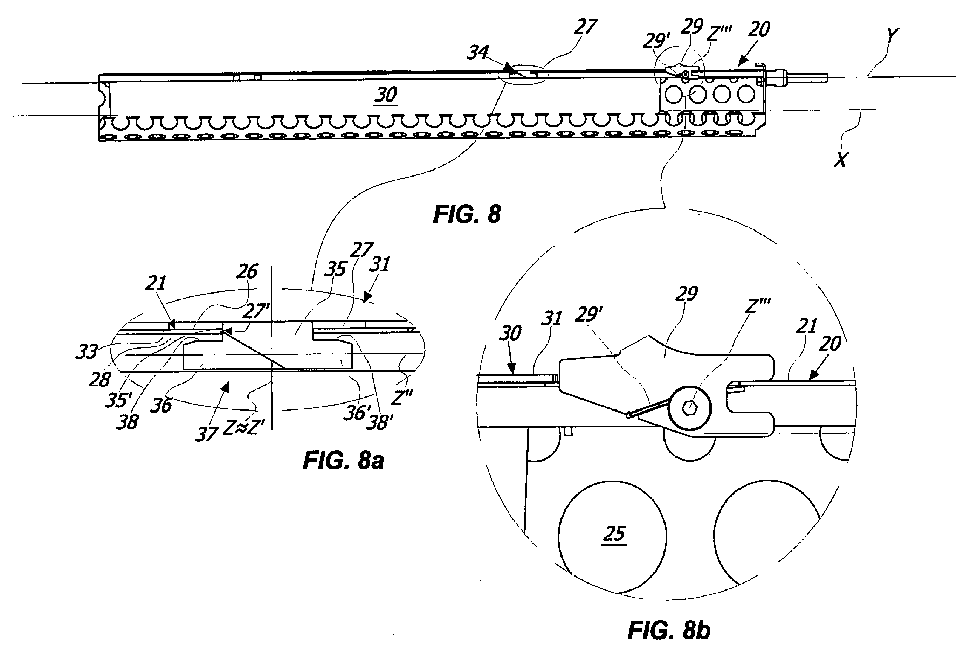

In this way, as particularly shown in FIGS. 8 and 8a, the outer edge **35'** of the elongated body **35** of each hook member **34** abuts against the inner surface **27'** of the respective slot **27.** The appendices **36, 36'** also slide along the axis **X** unitarily with the elongated body **35.**

Therefore, if the device **10** during its path through the leavening sections L and baking sections **K** is shaked or overturned, the impact of the upper surface **38** of the appendix **36** against the lower surface **28** of the slot **27** prevents the uncoupling of the container **30** from the frame **20.**

Appropriately, the quick hooking/unhooking means may further comprise a safety element **29,** which may rotate around the axis **Z"** between a working position, shown in FIG. 9, in which it interacts with the edge **31** of the container **30,** and a resting position, shown in FIG. 7, wherein the safety element **29** and the container are reciprocally disengaged.

In the working position, the safety element **29** may act on the hook members **34** to force them against the respective slots **27,** so as to prevent the unhooking of the container **30** from the frame **20.** In particular, as shown in FIG. 8b, the safety element **29** in its working position acts as a mechanical stop for the outer edge **35'** of the elongated body of each hook member **34,** in order to keep the container **30** in operating position and to prevent the disengagement thereof from the frame **20.**

Vice versa, when the safety element **20** is in its resting position, it is possible to disanchor the hook members **34** from the slots **27,** so that the container **30** is freely unhookable from the frame **20.**

Advantageously, the safety member **29** may include counteracting elastic means, for example a spring **29',** acting thereon to keep it normally in its working position. This increases the safety of the anchorage between the container **30** and the frame **20.**

Therefore, to allow the coupling/uncoupling and the hooking/unhooking of the container **30** to/from the frame **20,** it is necessary to exert a pressure on the safety element **29** to rotate it from the working position, where it remains in absence of outer forces, to the resting position, as shown in FIG. 7.

Subsequently, the safety element **29** automatically rotates to its working position upon releasing of the pressure thereon, so as to prevent the unhooking of the container **30** from the frame **20.**

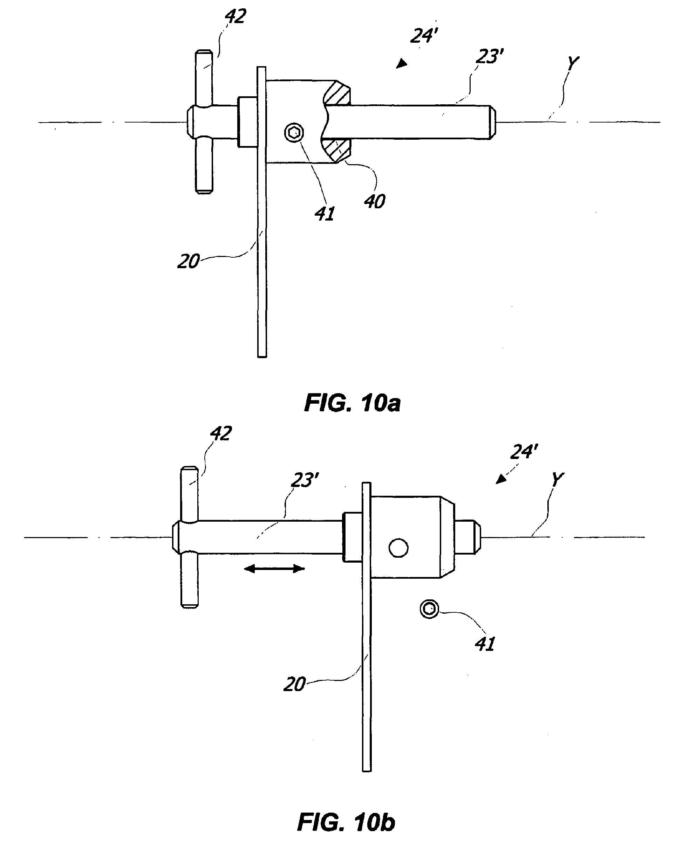

In a preferred, non exclusive embodiment, independently from the presence or not of the quick hooking/unhooking means **34, 27, 29** of the container **30** to/from the support frame **20** and from the way of reciprocal coupling thereof, one of the pivots **23, 23',** or both pivots, may be mounted within a seat **40** for slidably moving between and extended working position, shown in FIG. 10a, and a compressed resting position, shown in FIG. 10b.

In the working position the pivot **23, 23'** may be in any way connected to the transport apparatus **T,** whereas in its resting position the pivot is freely disconnectable from the transport apparatus **T.**

Appropriately, a blocking screw **41** may be provided, acting on the respective pivot **23' to** keep it blocked in its working position.

In order to move the pivot **23'** to its resting position, the operator may remove the screw **41** from its seat and, acting on the holding means **42,** manually slide the pivot **23'** along the axis **Y** until the resting position.

The above description clearly shows that the invention fulfils the intended objects.

The invention is susceptible to many changes and variants, all falling within the inventive concept expressed in the annexed claims. All particulars may be replaced by other technically equivalent elements, and the materials may be different according to the needs, without departing from the scope of the invention.

## Claims

1. A device operatively connectable to a transport system **(T)** of the type chain or the like for supporting and moving the food dough **(P)** through a plant for the production of baked products, the device comprising:
- at least one container **(30)** for at least one portion of food dough **(P)**, said container **(30)** defining a first longitudinal axis **(X)**;
- a frame **(20)** for supporting said at least one container **(30)**, said frame **(20)** having an elongated shape to define a second longitudinal axis **(Y)** and including two opposite ends **(24, 24')** operatively connectable to the transport system **(T)**;
- means **(34, 27, 29)** for quick hooking/unhooking said at least one container (30) to/from said supporting frame **(20)**;
**characterized in that** said quick hooking/unhooking means (34, 27, 29) are configured to allow coupling/uncoupling of said at least one container (30) to/from said frame (20) by mutual sliding along said first axis (X) and/or said second axis (Y) once the same are mutually coupled.

2. Device according to claim 1, wherein said at least one container (30) and said frame (20) are mutually couplable/uncouplable in such a manner that when the same are coupled said first longitudinal axis (X) and said second longitudinal axis (Y) are substantially parallel to each other.

3. Device according to claim 1 or 2, wherein said quick hooking/unhooking means (34, 27, 29) include at least one male member (34) engageable with/disenagageable from a respective at least one female member **(27)**, one of said frame **(20)** and said at least one container **(30)** including said at least one male member **(34)**, the other including said at least one female member **(27)**.

4. Device according to claim 3, wherein said quick hooking/unhooking means **(34, 27, 29)** include at least one pair of male members **(34)** made on opposite sides **(31', 31")** of said one of said frame (20) and said at least one container **(30)**, said quick hooking/unhooking means **(34, 27, 29)** further include at least one pair of female members **(27)** manufactured on corresponding opposite sides **(21', 21")** of the other of said frame **(20)** and said at least one container **(30)**.

5. Device according to one or more of the preceding claims, wherein said quick hooking/unhooking means **(34, 27, 29)** further include a safety member **(29)** movable between a working position in which it is susceptible to interact with said at least one container **(30)** to prevent its unhooking from said frame **(20)** and a resting position in which said at least one container **(30)** is freely hookable/unhookable to/from said frame **(20)**, elastic contrast means **(29')** being provided acting on said safety member **(29)** for normally forcing thereof in said working position.

6. Device according to one or more of the preceding claims, wherein said at least one container **(30)** includes a first peripheral edge **(31)** and a concave portion **(32)** to house the food dough (P), said frame **(20)** including a second peripheral edge **(21)**, said first peripheral edge **(31)** including a bottom surface **(33)** susceptible to remain at least partially faced to the top surface **(26)** of said second peripheral edge **(21)** of said frame **(20)** once said at least one container **(30)** is coupled therewith.

7. Device according to one or more of the preceding claims, wherein each female member **(27)** includes a passing-through slot, each male member **(34)** including a respective hook member, said second peripheral edge **(21)** of said frame **(20)** comprising said passing-through slot **(27)**, said first peripheral edge **(31)** of said at least one container **(30)** including said hook member **(34)**.

8. Device according to the claim 7, wherein said hook member **(34)** includes an elongated body **(35)** extending downwardly from said first peripheral edge **(31)** of said at least one container **(30)** having a free end **(37)** including at least one appendix **(36, 36')** susceptible to pass through the respective slot **(27)** when the coupling/uncoupling of said at least one container **(30)** to/from said frame **(20)** and to abut against said second peripheral edge **(21)** once said at least one container **(30)** is coupled to said frame **(20)** for the mutual hooking thereof.

9. Device according to the claim 8, wherein said elongated body **(35)** includes one couple of appendices **(36, 36')** outwardly extending from opposite sides thereof for coupling/uncoupling said at least one container **(30)** to/from said frame **(20)** regardless of the coupling sense thereof.

10. Device according to one or more of the preceding claims, wherein said at least one container **(30)** is made of food grade polymer material resistant to a temperature of at least 200 °C.

11. Device according to one or more of the preceding claims, wherein said support frame **(20)** includes at least one pin **(23, 23')** located at one of said ends **(24, 24')** mounted within a seat to slidably move between a working position which is distal from the relative end **(24, 24')** and a resting position which is proximal thereto **(24, 24')** to allow a quick connection/disconnection of said support frame **(20)** to/from the transport system **(T)**.

## Patentansprüche

1. Vorrichtung funktional mit einem Transportsystem (T) von der Kette Typ oder dergleichen zum Tragen und Bewegen der Lebensmittel Teig (P) durch eine Anlage zur Herstellung von Backwaren, wobei die Vorrichtung umfasst:
- Mindestens einen Behälter (30) für mindestens einen Teil der Nahrung Teig (P), wobei der Behälter (30) eine erste Längsachse (X);
- Einen Rahmen (20) zum Halten der mindestens einen Behälter (30), wobei der Rahmen (20) eine längliche Form aufweisen, um eine zweite Längsachse (Y) definieren, und mit zwei gegenüberliegenden Enden (24, 24') betriebsmäßig mit der Transportsystem (T);
- Mittel (34, 27, 29) zum schnellen Einhängen/Aushängen des mindestens einen Behälters (30) zu/von dem Stützrahmen (20);
**dadurch gekennzeichnet, daß** schnelle Einhängen/Aushängen (34, 27, 29) konfiguriert sind, um ein Koppeln/Entkoppeln der mindestens einen Behälter (30) zu/von dem Rahmen (20) durch gegenseitiges Verschieben entlang der ersten Achse (X) und/oder der zweiten Achse (Y), wenn die gleichen einander gekoppelt sind.

2. Vorrichtung nach Anspruch 1, wobei der mindestens eine Behälter (30) und dem Rahmen (20) gegenseitig koppelbar/entkoppelbar in einer solchen Weise, dass, wenn dieselbe gekoppelt sind, die erste Längsachse (X) und die zweite Längsachse (Y) im wesentlichen zueinander parallel sind.

3. Vorrichtung nach Anspruch 1 oder 2, wobei das schnelle Einhängen/Aushängen (34, 27, 29) mindestens ein männliches Element (34), die mit/disenagageable von einem entsprechenden mindestens einen Aufnahmeelement (27), einer zwischen dem Rahmen (20) und dem wenigstens einen Behälter (30), der mindestens ein männliches Element (34), die andere zwischen dem Rahmen (20) und dem wenigstens einen Behälter (30) mit dem mindestens einen Aufnahmeelement (27).

4. Vorrichtung nach Anspruch 3, wobei das schnelle Einhängen/Aushängen (34, 27, 29) wenigstens ein Paar von männlichen Elementen (34) aus auf gegenüberliegenden Seiten (31 ', 31 ") der einen zwischen dem Rahmen (20) und dem wenigstens einen Behälter (30), wobei die schnelle Einhängen/Aushängen (34, 27, 29) ferner wenigstens ein Paar von weiblichen Elementen (27) auf entsprechenden gegenüberliegenden Seiten hergestellt (21', 21") des andere zwischen dem Rahmen (20) und dem wenigstens einen Behälter (30).

5. Vorrichtung nach einem oder mehreren der vorhergehenden Ansprüche, wobei das schnelle Einhängen/Aushängen (34, 27, 29) ferner ein Sicherheitselement (29) zwischen einer Arbeitsposition, in der sie anfällig für eine Wechselwirkung mit der mindestens einen Behälter (30) in seine Aushängen zu verhindern dem Rahmen (20) und einer Ruheposition, in der mindestens eine Behälter (30) frei einhängbare/unhookable zu/von dem genannten Rahmen (20), elastische Kontrastmittel (29') ist vorgesehen, die auf das Sicherheitselement (29) zum normalen zwingen davon in der Arbeitsposition.

6. Vorrichtung nach einem oder mehreren der vorhergehenden Ansprüche, wobei mindestens ein Behälter (30) einen ersten Umfangsrand (31) und einen konkaven Abschnitt (32), um das Lebensmittel Teig (P) aufzunehmen, wobei der Rahmen (20) eine zweite äußere Kante (21), wobei der erste Umfangsrand (31) mit einer Bodenfläche (33) empfindlich bleiben zumindest teilweise an der Oberseite (26) gegenüber dem zweiten Umfangsrand (21) des Rahmens (20) wenn der mindestens eine Behälter (30) mit diesem gekoppelt ist.

7. Vorrichtung nach einem oder mehreren der vorhergehenden Ansprüche, wobei jedes Aufnahmeelement (27) einen Durchtritt Schlitz, wobei jeder Stecker (34) mit einem jeweiligen Hakenteil, zweiten peripheren Rand (21) des Rahmens (20) umfassend das Durchqueren von Schlitz (27), wobei der erste Umfangsrand (31) des mindestens einen Behälters (30) mit dem Hakenelement (34).

8. Vorrichtung nach dem Anspruch 7, wobei der Haken (34) einen länglichen Körper (35), die sich von der ersten Umfangskante (31) des mindestens einen Behälters (30) mit einem freien Ende (37) mit mindestens einen Ansatz (36, 36') anfällig für durch den jeweiligen Schlitz (27) übergeben, wenn die Kopplung/Entkopplung der wenigstens einen Behälter (30) zu/von dem Rahmen (20) und zur Anlage an dem zweiten Umfangsrand (21), wenn der mindestens eine Behälter (30) gekoppelt ist, um den Rahmen (20) zum gegenseitigen Einhaken derselben.

9. Vorrichtung nach dem Anspruch 8, wobei der längliche Körper (35) ein Paar von Verlängerungen (36, 36') sich nach außen von gegenüberliegenden Seiten davon zum Koppeln/Entkoppeln der mindestens einen Behälter (30) zu/von dem Rahmen (20) unabhängig von der Kopplung Sinn davon.

10. Vorrichtung nach einem oder mehreren der vorhergehenden Ansprüche, wobei mindestens ein Behälter (30) von Lebensmittelqualität Polymermaterial gegen eine Temperatur von mindestens 200 °C hergestellt.

11. Vorrichtung nach einem oder mehreren der vorhergehenden Ansprüche, wobei der Tragrahmen (20) wenigstens einen Stift (23, 23') in einem Sitz angebracht ist, um gleitend zwischen einer Bewegung an einem der Enden (24, 24) angeordnet' Arbeitsposition, die distal von dem relativen Ende (24, 24') und einer Ruheposition, die proximal davon (24, 24'), um eine schnelle Verbindung/Trennung des Tragrahmens (20) aus/in das Transportsystem (T).

## Revendications

1. Un dispositif pouvant être connectée fonctionnellement à un système de transport (T) du type chaîne ou analogue pour supporter et déplacer la pâte alimentaire (P) à travers une installation pour la production de produits cuits au four, l'appareil comprenant:
- au moins un conteneur (30) pour au moins une portion de pâte alimentaire (P), ledit conteneur (30) définissant un premier axe longitudinal (X);
- un cadre (20) pour supporter ledit au moins un conteneur (30), ledit cadre (20) ayant une forme allongée pour définir un second axe longitudinal (Y) et comportant deux extrémités opposées (24, 24') pouvant être connectée fonctionnellement au système de transport (T);
- un moyen (34, 27, 29) pour l'accrochage/le décrochage rapide dudit au moins un conteneur (30) vers/à partir dudit cadre (20) de support;
**caractérisé en ce que** ledit moyen d'accrochage/décrochage rapide (34, 27, 29) est configuré pour permettre le couplage/découplage dudit au moins un conteneur (30) vers/à partir dudit cadre (20) par coulissement mutuel le long dudit premier axe (X) et/ou dudit second axe (Y) une fois les mêmes sont mutuellement couplés.

2. Dispositif selon la revendication 1, dans lequel ledit au moins un conteneur (30) et ledit cadre (20) sont mutuellement couplable/découplable d'une manière telle que, lorsque les mêmes sont couplés, ledit premier axe longitudinal (X) et ledit second axe longitudinal (Y) sont sensiblement parallèles l'un à l'autre.

3. Dispositif selon la revendication 1 ou 2, dans lequel ledit moyen d'accrochage/décrochage rapide (34, 27, 29) comprend au moins un élément mâle (34) engageable avec/désenagageable à partir d'un au moins un élément femelle respectif (27), un entre ledit cadre (20) et ledit au moins un conteneur (30) comprenant ledit au moins un élément mâle (34), l'autre entre le cadre (20) et le au moins un conteneur (30) comprenant ledit au moins un élément femelle (27).

4. Dispositif selon la revendication 3, dans lequel ledit moyen d'accrochage/décrochage rapide (34, 27, 29) comprend au moins un couple d'éléments mâles (34) fabriquées sur des côtés opposés (31', 31") dudit un entre ledit cadre (20) et ledit au moins un conteneur (30), ledit moyen d'accrochage/décrochage (34, 27, 29) comprenant en outre au moins un couple d'éléments femelles (27) fabriquées sur des côtés opposés correspondants (21 ', 21") de l'autre entre ledit cadre (20) et ledit au moins un conteneur (30).

5. Dispositif selon l'une ou plusieurs des revendications précédentes, dans lequel ledit moyen d'accrochage/décrochage rapide (34, 27, 29) comprend en outre un organe de sécurité (29) mobile entre une position de travail dans laquelle il est susceptible d'interagir avec ledit au moins un conteneur (30) pour empêcher son décrochage dudit cadre (20) et une position de repos dans laquelle ledit au moins un conteneur (30) est librement accrochable/décrochable vers/à partir dudit cadre (20), le dispositif étant muni d'un moyen de contraste élastique (29') agissant sur ledit organe de sécurité (29) pour lui forcer normalement dans ladite position de travail.

6. Dispositif selon l'une ou plusieurs des revendications précédentes, dans lequel ledit au moins un conteneur (30) comprend un premier bord périphérique (31) et une partie concave (32) pour loger la pâte alimentaire (P), ledit cadre (20) comprenant un second bord périphérique (21), ledit premier bord périphérique (31) comprenant une surface inférieure (33) susceptible de rester au moins partiellement en face à la surface supérieure (26) dudit second bord périphérique (21) dudit cadre (20) une fois que ledit au moins un conteneur (30) est couplé avec celui-ci.

7. Dispositif selon l'une ou plusieurs des revendications précédentes, dans lequel chaque élément femelle (27) comporte une fente traversante, chaque élément mâle (34) comprenant un élément d'accrochage respectif, ledit second bord périphérique (21) dudit cadre (20) comprenant ladite fente traversante, ledit premier bord périphérique (31) dudit au moins un conteneur (30) comprenant ledit élément d'accrochage (34).

8. Dispositif selon la revendication 7, dans lequel ledit élément d'accrochage (34) comprend un corps allongé (35) s'étendant vers le bas à partir dudit premier bord périphérique (31) dudit au moins un conteneur (30) ayant une extrémité libre (37) comprenant au moins un appendice (36, 36') susceptible de passer à travers la fente respective (27) lorsque du couplage/découplage dudit au moins un conteneur (30) vers/à partir dudit cadre (20) et pour venir en butée contre ledit second bord périphérique (21) une fois que ledit au moins un conteneur (30) est couplé audit cadre (20) pour l'accrochage mutuelle de ceux-ci.

9. Dispositif selon la revendication 8, dans lequel ledit corps allongé (35) comprend un couple d'appendices (36, 36') s'étendant vers l'extérieur à partir de côtés opposés de celui-ci pour le couplage/découplage dudit au moins un conteneur (30) vers/à partir dudit cadre (20) quel que soit le sens de couplage de ceux-ci.

10. Dispositif selon l'une ou plusieurs des revendications précédentes, dans lequel ledit au moins un conteneur (30) est faite d'un matériau polymère de qualité alimentaire résistant à une température d'au moins 200 °C.

11. Dispositif selon l'une ou plusieurs des revendications précédentes, dans lequel ledit cadre de support (20) comprend au moins une broche (23, 23') situé à l'une desdites extrémités (24, 24') monté à l'intérieur d'un siège pour déplacer de façon coulissante entre une position qui est distale par rapport à l'extrémité relative (24, 24') et une position de repos qui elle est proximal (24, 24') pour permettre une connexion/déconnexion rapide dudit cadre de support (20) vers/à partir de le système de transport (T).
